# EUROPEAN PATENT SPECIFICATION

(11) **EP 4 399 360 B1**
(45) Date of publication and mention of the grant of the patent: **21.01.2026**
(21) Application number: 22793774.5
(22) Date of filing: 06.09.2022
(51) Int. Cl.: D04H 1/425, D04H 1/4258, D04H 1/4274, D21C 3/02, D21C 3/04, D21C 3/26, D21C 9/00, D21C 9/02, D21H 11/12, D21H 13/24

(54) **METHOD FOR THE TREATMENT OF A FIBROUS RAW MATERIAL**
VERFAHREN ZUR BEHANDLUNG EINES FASERROHSTOFFES
PROCÉDÉ DE TRAITEMENT D'UNE MATIÈRE PREMIÈRE FIBREUSE

(30) Priority: 09.09.2021 FI 20215949
(43) Date of publication of application: 17.07.2024
(73) Proprietor: Infinited Fiber Company Oy, 02150 Espoo (FI)
(72) Inventor: SIREN, Sakari, 02150 Espoo (FI); STJERNBERG, Martin, 02150 Espoo (FI)
(74) Representative: Laine IP Oy
(86) International application number: PCT/FI2022/050588
(87) International publication number: WO 2023/037048

(56) References cited:
- WO-A1-2020/013755
- WO-A1-2020/251463

## Description

### FIELD

The present invention relates to a method of treating a fibrous raw material containing cellulosic and polyester fibres and the solid material obtained thereby.

### BACKGROUND

Currently almost all postconsumer textile waste is sent to incineration or landfills despite approximately 95 % of textiles being recyclable. Only a small portion of pre-consumer waste is mechanically recycled. Since the beginning of 2016 disposing of used textiles as landfill has been prohibited in the European Union (EU). Thus, in EU countries, textiles and their raw materials that cannot be reused or recycled are typically burnt in energy production plants.

Naturally, recycling would be preferred. The clothing textile market is predominantly based on either cotton or polyester, both of which have an environmental impact. Cotton growing, for example, requires huge amounts of water as well as pesticides and artificial fertilizers. The global demand for cotton has seriously outgrown the planet's resources for producing virgin material. Therefore, it is essential that postconsumer textile waste is recycled. Processing textile materials to obtain reusable fibres is known, e.g. from WO2013/124265A1, which describes the regeneration of a cellulose containing material by dispersing and precipitation.

One process used in the recycling of cotton-based textile waste materials is described in WO2018/197756 in which the textile material is treated in an alkaline extraction and then further treated with an acid to cause at least a partial dissolution of the textile-based material.

Another known technique utilized in recycling is the hydrolysis of the fibres. Typically, it is preceded by a mechanical removal of metals and hard polymer pieces, such as buttons and zippers. For example, WO2010/124944A1 discloses a process for the hydrolysis of cellulose.

The Lyocell process is a process in which cellulose is regenerated by dissolving a cellulosic starting material in a first generation ionic liquid, NMMO. Ioncell - F, developed from the lyocell process, is a regeneration process including a dissolution of the starting material using a recently developed ionic liquid as solvent (WO2014/162062A1). The BioCelSol process, in turn, utilizes an enzymatic treatment of the starting material. Both of these processes, however, focus on preparing textiles from wood.

The chemically separated fraction of cellulose fibres can subsequently be used for various purposes, including carbamation or spinning.

It is known from US 7,662,953 how carbamate cellulose is manufactured from high quality virgin cellulose raw materials such as dissolving pulp. A multi-phase dissolution technique for carbamate cellulose is presented in US 8,066,903, where it is taught how a low temperature is applied in the dissolution and how the solution is prepared by first wetting the mass in low diluted alkali and then in highly concentrated and strongly chilled alkali.

A separation method involving a combination of mechanical and chemical processes for the separation of cellulose fibres from a textile material comprising cellulose fibres and other fibre and non-fibre elements is described in EP 3 511 448 A1. In such a process, the textile materials are first shredded in order to remove larger non-fibre foreign bodies. The remaining fibre components are then mechanically treated to separate cellulose fibres from non-cellulose fibres before the cellulose fibres undergo a chemical treatment to remove any non-cellulose fibres still remaining on the cellulose fibres.

A process for the separation of the cellulosic part from a polyester and cellulose composition is described in international patent application publication WO 2020 013755 A1. The application describes a process for separation of the cellulosic part from a raw material composition comprising polyester and cellulose containing composition, a cellulosic composition obtainable from the process for separation, a mixture comprising polyester hydrolysis products obtainable from the process for separation, a pulp, a dissolving pulp, a paper pulp, a regenerated cellulosic fibres product, and a paper product. In the separation process a polyester/cellulose composition is contacted with a hydrolyzing liquor comprising an alkaline solution. Polyester hydrolysis products form as a part of the separation process and build up in the alkaline solution.

US patent 4345039 discloses a method of recovering polyester fibres from polyester/cotton textile waste. In the method the mixed textile is treated with anhydrous HCl gas, which while not damaging to the polyester, degrades the cellulosic material to cellulosic powder and results in chlorinated hydrocarbons.

### SUMMARY OF THE INVENTION

It is an aim of the present invention to overcome at least some of the problems associated with the prior art and provide a method of treating a fibrous raw material containing cellulosic and polyester fibres

The invention is defined by the features of the independent claims. Some specific embodiments are defined in the dependent claims.
According to a first aspect of the present invention, there is provided a method of treating a fibrous raw-material, comprising the steps of providing a fibrous raw-material containing cellulosic fibres and polyester fibres, subjecting the raw-material to acid treatment at a pH of less than 5 in an aqueous acid medium to obtain a first modified raw-material, subjecting the first modified raw-material to a washing operation carried out with water, subjecting the washed first modified fibrous raw-material to a an alkaline treatment at a pH of more than 7 in an alkaline cooking liquor to dissolve at least a portion of the polyester fibres and to form a second modified fibrous raw-material, subjecting the second modified fibrous raw-material to separation to separate solid matter from an aqueous liquid phase comprising dissolved material, recovering the solid matter of the separation, subjecting the recovered second modified raw-material, i.e. the solid material of the separation, to a washing operation carried out with water or an aqueous liquid, subjecting the liquid phase, i.e. the aqueous liquid phase from the separation and/or previous washing step, to a first membrane filtration step using a micromembrane to obtain a first reject fraction and a first aqueous permeate, subjecting the first permeate to a second membrane filtration step using a nanomembrane to obtain a second reject fraction and a second permeate, recovering the second aqueous permeate and recycling the second aqueous permeate to an alkaline treatment step.

### BRIEF DESCRIPTION OF THE DRAWINGS

FIGURE 1 illustrates a process for the treatment of a fibrous raw material in accordance with at least some embodiments of the present invention.
FIGURE 2 is a graph plotting total organic carbon (TOC) in mg/l against water recovery, i.e. weight reduction %.

### EMBODIMENTS

As mentioned above it is an aim of the present invention to provide a method of treating a fibrous raw material. By means of the present invention it has surprisingly been found that hydrolysis products arising from polyester depolymerisation can be removed from an alkaline cooking liquor by membrane filtration, providing a permeate that can be recycled to an alkaline treatment step, thereby improving the economy in terms of the amount of alkaline needed to treat a fibrous raw material.

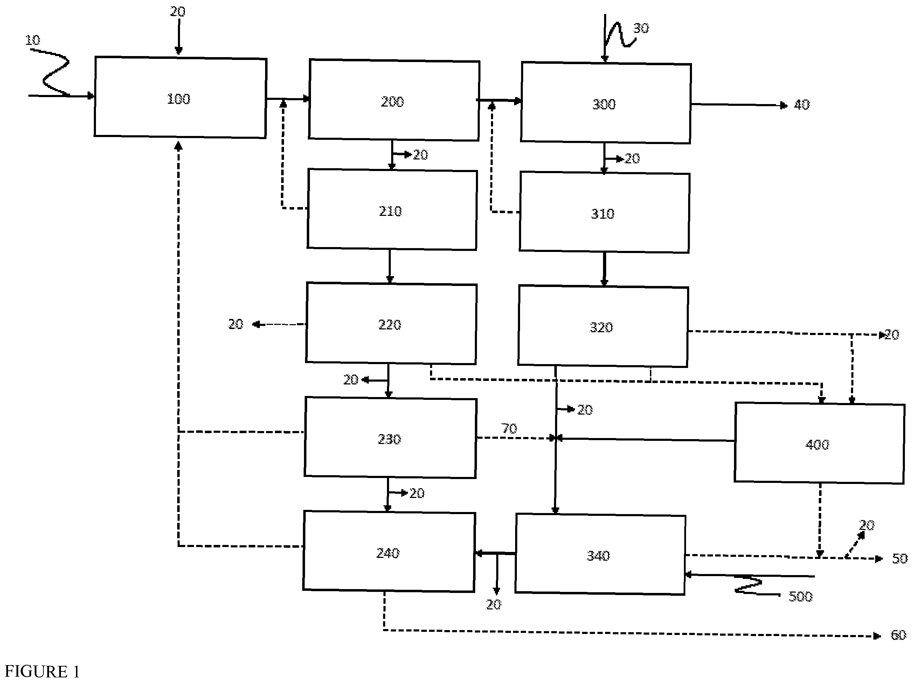

FIGURE 1 illustrates a process in accordance with at least some embodiments of the present invention in which fibres 10 obtained by subjecting a fibrous raw material containing cellulosic fibres and polyester fibres to an acid treatment in an aqueous acid medium to obtain a first modified raw material and then washing with water, and optionally an aqueous stream from wet air oxidation 20 (excluding WetOxidation treated rejects exhausted from 220 and 320 and optionally Wet Oxidation treated reject 50), are subjected to an alkaline cooking step 100, whereby at least a portion of the polyester fibres are dissolved to form a second modified fibrous raw material, which is directed to separation 200. After separation of fibres 200, at least a part of the aqueous filtrate can be optionally subjected to wet air oxidation 20. The aqueous 210 stream is optionally screened to remove large fibrous particles which are optionally redirected to the second modified fibrous raw material stream after alkaline cooking 100 before washing 200. After optional screening the aqueous stream 210 is subjected to microfiltration across a micromembrane in a microfiltration unit 220 to provide a reject and a first aqueous permeate. The first reject can be directed to optional reject concentration unit (400). The first aqueous permeate is directed to nanofiltration across a nanomembrane in a nanofiltration unit 230 and the reject 70 is directed to diafiltration by mixing with aqueous permeates coming from 320 and 400. At least a part of the aqueous permeate obtained from microfiltration (220) can be optionally directed to Wet Oxidation treatment. The reject is directed to a further nanofiltration step across a further nanomembrane in a nanofiltration unit 340 and the permeate is directed to a concentration unit 240 e.g. for mechanical vapour recompression unit and at least a part of the permeate can be optionally directed to WetOxidation treatment, before the concentrated permeate comprising alkaline solution is directed to the alkaline cooking step 100. After the separation step 200, the second modified fibrous raw material is directed to one or more washing steps 300 where washing water 30 is added. Treated fibrous raw material 40 is obtained. At least part of the aqueous liquor obtained from washing stage is optionally subjected to wet air oxidation treatment 20. The aqueous stream 310 is optionally screened to remove larger fibrous particles which are optionally redirected to the second fibrous raw material entering the one or more washing step 300. After optional screening the aqueous stream 310 is subjected to microfiltration across a micromembrane in a microfiltration unit 320 to provide a reject and a first aqueous permeate. The first aqueous permeate is directed to nanofiltration across a nanomembrane in a nanofiltration unit 340 and the reject is directed to optional reject concentration 400. At least part of the aqueous permeate and or reject obtained from 320 can be directed to Wet Oxidation treatment. The nanofiltration unit 340 optionally has an inlet 500 for an aqueous stream for diafiltration at least a part of the reject. The alkali reject 50 comprising e.g. terephthalate or pigments is removed from the nanofiltration unit 340 and optionally subjected to further wet air oxidation 20. The permeate is directed from the nanofiltration unit 340 to the concentration unit 240. At least part of the permeate from 340 can be optionally directed to WetOxidation treatment. After the permeate has been concentrated, recovered water 60 is removed from the concentration unit and directed to further use and concentrated permeate comprising alkaline solution is directed to the alkaline cooking step 100.

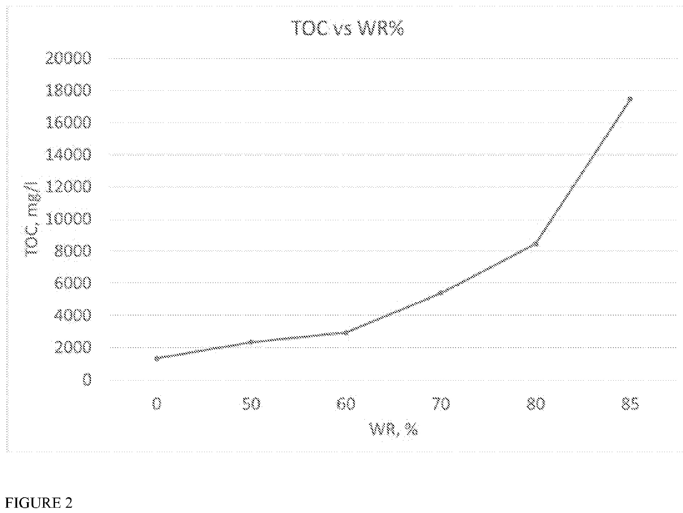

FIGURE 2 is a graph plotting total organic carbon (TOC) mg/l against weight reduction (WR) %, in accordance with at least some embodiments of the invention. Weight reduction (WR) % determines the separation efficiency of the system since WR describes the percentage of the mass of the liquid contained in the permeate of the filtration step from the mass of the feed entering the filtration step. Thus, WR describes the amount of recovered water. If WR% is higher than optimum, the penetration of impurities through the membrane is rapidly increasing and outweigh the benefit of the alkali recovery. The graph shows that with respect to TOC, WR% is preferably at a maximum of 70%. According to one embodiment, WR% is in the range of 50 - 80 %, wherein TOC reduction of 60 - 95 % is obtained. According to one embodiment, a maximum amount of the permeate formed in the first nanofiltration step (nanomembrane filtration) is obtained with TOC reduction level of 70 % that is obtained with WR of 70 %. The permeate recovered in the first nanofiltration step can be utilized as such without concentrating it. Higher TOC reduction leads to a smaller absolute amount of the recovered alkali. As being said, higher WR leads to increase of impurities in the concentrate, i.e. reject, which leads to the need of increasing the membrane surface area and decreases lifetime of the membranes due to increase of pressure and occlusion of the membranes. Further, increase of WR leads to significant decrease of reduction of short-chained organic acids, such as formic acid and lactic acid, wherein those are enriched in the spin bath circulation. Decrease of WR, in turn, leads also to decrease of the amount of the recovered alkali. Further, if the reject of a low WR filtration step is subjected to diafiltration, it causes an increased need of evaporation concentration of the obtained permeate. Thus, by optimizing WR and TOC reduction, the aim is to achieve as impurity free recycling of active alkali as possible still obtaining recovered mass of high quality. High quality requires low amount of impurities, colour pigments etc., in order to avoid them affecting the chemical consumption in acid and alkali treatment steps or the quality of fibers formed. In the context of the present description, TOC is measured according to SFS-EN 1484:1997 standard, in which TOC is defined as non purgeable organic carbon.

According to an example aspect of the present invention, there is provided a method of treating a fibrous raw-material containing cellulosic fibres and polyester fibres, comprising the steps of subjecting the raw-material to acid treatment in an aqueous acid medium to obtain a first modified raw-material, subjecting the first modified raw-material to a washing operation carried out with water, subjecting the washed first modified fibrous raw-material to an alkaline treatment in an alkaline cooking liquor to dissolve at least a portion of the polyester fibres and to form a second modified fibrous raw-material, subjecting the second modified fibrous raw-material to separation to separate solid matter from an aqueous liquid phase comprising dissolved material, recovering the solid matter of the separation, subjecting the recovered second modified raw-material, i.e. the solid material of the separation, to a washing operation carried out with water or an aqueous liquid, wherein a washed solid material and liquid phase comprising the washing solution are obtained, subjecting the liquid phase(s) to a first membrane filtration step using a micromembrane to obtain a first reject fraction and a first aqueous permeate, subjecting the first permeate to a second membrane filtration step using a nanomembrane to obtain a second reject fraction and a second permeate, recovering the second aqueous permeate and recycling the second aqueous permeate to an alkaline treatment step.

Thus, embodiments relate to a method of treating a fibrous raw-material. In an embodiment the method comprises the steps of providing a fibrous raw-material containing cellulosic fibres and polyester fibres, subjecting the raw-material to acid treatment at a pH of less than 5 in an aqueous acid medium to obtain a first modified raw-material, subjecting the first modified raw-material to a washing operation carried out with water, subjecting the washed first modified fibrous raw-material to a an alkaline treatment at a pH of more than 7 in an alkaline cooking liquor to dissolve at least a portion of the polyester fibres and to form a second modified fibrous raw-material, subjecting the second modified fibrous raw-material to separation to separate solid matter from an aqueous liquid phase comprising dissolved material, recovering the solid matter of the separation, subjecting the recovered second modified raw-material to a washing operation carried out with water or an aqueous liquid, subjecting the liquid phase to a first membrane filtration step using a micromembrane to obtain a first reject fraction and a first aqueous permeate, subjecting the first permeate to a second membrane filtration step using a nanomembrane to obtain a second reject fraction and a second permeate, recovering the second aqueous permeate and recycling the second aqueous permeate to an alkaline treatment step.

In an embodiment the method comprises the steps of providing a fibrous raw-material containing cellulosic fibres and polyester fibres, and optionally colours, pigments, dyes, organics and/or inorganics. In a preferred embodiment the fibrous raw-material contains at least 0.1 % by weight, in particular at least 1 % by weight, most suitably 2-8 % by weight, suitably 2-15 % by weight of polyester fibres, and up to 25 % of polyester fibres by weight of dry weight of the raw-material.

In an embodiment the method comprises subjecting the raw-material to acid treatment at a pH of less than 5 in an aqueous acid medium. Preferably, the method comprises carrying out the acid treatment in an aqueous inorganic or organic acid, in particular in aqueous mineral acid, such as sulphuric acid, in particular at a temperature in the range of 50 to 100°C, preferably 60 to 95°C, suitably >70°C, preferably at temperature below 100 °C, suitably at atmospheric pressure to obtain a first modified raw-material. In a typical embodiment the aqueous acid medium comprises 3 - 6 g acid per litre of water. After the acid treatment, the first modified raw material preferably has a consistency of 6 - 15 %. Suitably, the acid treatment hydrolyses cellulose, reduces its molecular weight and polydispersity, and dissolves at least a portion of, preferably the majority of acid soluble metals and acid soluble nitrogen, phosphorus and chlorine containing compounds and acidic water soluble organics e.g. textile finishes present in the fibrous raw material. For the purposes of embodiments the majority of acid soluble metals typically amounts to <0.3 % by weight of dry weight of the raw material. For the purposes of embodiments the majority of acid soluble nitrogen, phosphorus and chlorine containing compounds typically amounts to <0.05 % by weight of dry weight of the raw material. For the purpose of embodiments the majority of acidic water soluble organics typically amounts to <1.0 % by weight of dry weight of the raw material.

In an embodiment the first modified raw-material is subjected to a washing operation carried out with water. Preferably the method comprises carrying out the washing operation such that the first modified raw-material has a residual acid content of less than 5 % by weight of dry weight pulp, in particular less than 1 % by weight of dry weight pulp, for example less than 0.5 % by weight of dry weight pulp, typically the washing step is carried out to minimise carrying acid (and optional dissolved cellulose derived impurities as total dissolved organic carbon (TOC) less than 1.5 % by weight of dry weight pulp, non-cellulose derived dissolved organics less than 0.5 % by weight of dry weight pulp and inorganics less than 0.2 % by weight of dry weight pulp) over into a subsequent step. In an embodiment carry-over of inorganics and organic carbon is also reduced in the washing operation, further improving the performance of alkali recycling process. After washing, the first modified raw-material is preferably dewatered, suitably to a consistency of 30 - 60 %. After acidic treatment the pulp dry weight is the dry weight of cellulose and polyester (PES). Residues of non-cellulose or non-polyester fibres can be present.

In an embodiment, after the washing operation the method further comprises subjecting the washed first modified fibrous raw-material to an alkaline treatment at a pH of more than 7 in an alkaline cooking liquor, preferably at a temperature in the range of 50 to 200°C, preferably 95 to 140°C, typically 100 to 120°C, suitably 110°C, suitably for a period of 30 minutes to 240 minutes, typically 60 minutes to 180 minutes, preferably 60 minutes to 120 minutes, typically at a pressure in the range of 0.1 to 3 bar(g) to dissolve at least a portion of the polyester fibres and to form a second modified fibrous raw-material, particularly in a consistency of 6 - 15 %. In a preferred embodiment the method comprises carrying out the alkaline treatment in an aqueous alkaline medium with at least one alkaline agent selected from inorganic and organic bases, such as amines, alkali metal hydroxides, alkali metal carbonates, alkali metal sulphides, ammonium sulphide, alkaline earth metal hydroxides, alkaline earth metal carbonates, alkaline earth metal sulphides and a mixture thereof, said alkaline agent being present in an amount which gives an alkalinity corresponding to at least 20 g/l, for example 25 to 100 g/l of NaOH, suitably 60 to 90 g/l NaOH and said alkaline treatment in particular being carried out at a temperature of 100 to 150 °C. In one embodiment the method comprises carrying out the alkaline treatment using at least partially white liquor of a pulping process.

According to an embodiment the method further comprises subjecting the second modified fibrous raw-material to separation to separate solid matter from an aqueous liquid phase comprising dissolved material, undissolved microparticulates and residual fibres. In a preferred embodiment the method comprises subjecting the second modified fibrous raw-material to separation to separate solid matter from an aqueous phase in a filter, such as a filter press, screw press or drum filter, or centrifuge.

In an embodiment the method further comprises recovering the solid matter of the separation. In a preferred embodiment the method comprises subjecting the recovered second modified raw-material to a washing operation carried out with water or an aqueous liquid, particularly at a temperature of up to 100 °C. Suitably the washing takes place in displacement washing and pressing equipment.

In a further embodiment the method comprises subjecting the liquid phase to a first membrane filtration step, particularly to filter solid particles, using a micromembrane, suitably one or more membranes, to obtain a first reject fraction and a first aqueous permeate. In an embodiment prior to the first membrane filtration step, preferably a part, particularly the majority of fibrous material remaining in the liquid phase from the solid matter separation step is removed from the liquid in an optional screening stage. In a typical embodiment, the first membrane filtration step takes place at a temperature in the range of 10 - 99 °C, for example 10 - 90 °C, suitably at a temperature in the range of 50 - 95 °C or 35 - 60 °C. The higher the temperature is during the filtration step, the higher is the viscosity, which results in better flux values. Permeate obtained from filtering is a high-energy fraction from which heat can be recovered. The micromembrane is typically comprised of membrane unit having a suitable pore size to remove of major part of undissolved microparticulates focusing to protect the subsequent nanomembrane unit. The filter type is preferable of a cross flow tubular type or a dynamic crossflow filter or a combination thereof. Other possible types include capillary and spiral types of filters. The filter materials can be polymeric membranes, ceramic or steel with ceramic coating. In a preferred embodiment the first membrane filtration step, typically a microfiltration step, is carried out using a membrane, suitably one or more membranes, having an average pore size (pore diameter) of 0.025 to 10 µm or a molecular weight cut-off of 50 to 500 kDa. The pressure used in the microfiltration step is preferably in the range of 2 - 6 barg, typically in the range of 3 - 5 barg. The flux is typically in the range 10 - 400 dm³/m²·h, more typically in the range of 100 - 350 dm³/m²·h. According to one embodiment, weight reduction in the microfiltration step is 80 - 99 %, typically 90 - 97 %. Microfiltration is preferably performed at an elevated temperature of about 50 - 95 °C. The first reject fraction typically contains undissolved particles with a mean size higher than the resolution of the micro filtration membrane (>0.025-10 um), for example the first reject fraction may contain residual undissolved cellulose and cellulose derived particles, residual undissolved non-cellulosic particles present in feedstock, colour pigments and their agglomerates, alkaline earth metal hydroxide, alkaline earth metal carbonate, alkaline earth metal sulphide alkaline earth metal phosphate alkaline earth metal silicate precipitates and suitably transition metal hydroxide, transition metal carbonate, transition metal sulphide, transition metal phosphate, transition metal silicate precipitates, and mixtures thereof. The first aqueous permeate typically contains dissolved organic molecules or their undissolved microparticulates, e.g. colour pigments, terephthalate in the form of a sodium salt, alcohols such as ethylene glycol, resins, waxes, carboxylic and hydroxy acids and free fatty acids in the form of their sodium salts, and inorganic ions, such as small amounts of two and/or three valent cations mainly in the form of dissolved hydroxides, carbonates, sulphides, phosphates or silicates, or anions such as sulphates, chlorides, silicates, carbonates, phosphates dissolved and/or in the form of microparticulates and undissolved micro or nanoparticles such as cellulose or cellulose derived microparticulates or non-cellulosic microparticulates with mean size smaller than the resolution of the microfiltration membrane (<0.025-10 um). In an embodiment the first reject fraction, typically comprising the above described composition is directed to effluent recovery and treatment, preferably to be utilized in a Kraft pulp mill integrated chemical recovery process or alternatively is directed to a chemical and or a biological wastewater treatment process.

In an embodiment, the method comprises subjecting the first permeate to a second membrane filtration step, particularly to filter dissolved molecules, using a nanomembrane, suitably one or more membranes, to obtain a second reject fraction and a second permeate. Preferably, the second membrane filtration step takes place at a temperature in the range of 10 - 70 °C, suitably at a temperature in the range of 35 - 60 °C, especially in the range of 50 - 60 °C. The nanomembrane is typically comprised of a membrane unit having a suitable molecular weight cut-off to remove the remaining undissolved microparticulates and at least a portion of, preferably the majority of dissolved impurities focusing to chemically purify the second permeate for recycling back to an alkaline treatment e.g. of the first modified raw material. The type of nanomembrane is preferable a spiral type membrane made of alkali stable materials. In a typical embodiment the second membrane filtration step is carried out using a membrane, suitably one or more membranes, having an average molecular weight cut-off of 50 to 1000 Da, preferably 50 - 500 Da, suitably 50 - 300 Da. The pressure used in the nanofiltration step is preferably in the range of 10 - 60 barg, typically in the range of 15 - 35 barg. The flux is typically in the range 2 - 90 dm³/m²·h, more typically in the range of 4 - 35 dm³/m²·h. According to one embodiment, weight reduction in the nanofiltration step is 40 - 85 %, typically 60 - 80 %. The second permeate typically contains the same composition of impurities as the first permeate but in reduced concentration. The main purpose of nanofiltration is to reduce the amounts of colour pigments alkali extracted from a mixed colour raw material feedstock (colour reduction) and to reduce the amount of polyester derived hydrolysis product (terephthalate reduction) and cellulose derived organic compounds (organic carbon reduction, TOC reduction), simultaneously reducing the amount of dissolved inorganics such as silicates, whereby the yield of recyclable active alkali species, such as sodium hydroxide, is maximised. The total recovery rate of the active alkali species, sodium hydroxide, is preferably at least 80 %. In an embodiment the second reject fraction, typically comprising terephthalate, colour pigments and their agglomerates and other cellulose derived or polyester derived hydrolysis products such as polyethylene terephthalate derived, or non-cellulose or non-polyester derived impurities or inorganics such as sodium silicate, is directed to effluent recovery and treatment preferably to be utilized in a Kraft pulp mill integrated chemical recovery process or alternatively directed to a chemical and or a biological wastewater treatment process, optionally terephthalate and selected organics such as organic acids can be separated and commercially utilized).

In an embodiment the method comprises recovering the second aqueous permeate. In a preferred embodiment the second aqueous permeate is recovered and concentrated by removing of excess of water to adjust the suitable level of active alkali concentration, e.g. sodium hydroxide concentration, for internal recycling. In one embodiment the method comprises the step of recycling the second aqueous permeate having a suitable concentration of active alkali, such as sodium hydroxide, to an alkaline treatment step.

In a further embodiment, the method comprises subjecting at least one, preferably one or more of the following aqueous streams to wet air oxidation:
- the washing water of the washing operation,
- the aqueous liquid phase of the separation step,
- the first aqueous permeate of the first membrane filtration step and
- the second aqueous permeate of the second membrane filtration step,
optionally along with at least one, preferably one or more, of the first and the second reject fractions. During the wet air oxidation, at least a part of suspended or dissolved material in the mentioned aqueous streams is oxidised by gaseous oxygen, ozone or hydrogen peroxide or mixture of thereof at elevated temperature. Wet Oxidation treatment is capable of destroying the colour (pigments) in the aqueous streams already at moderate conditions: In one embodiment the treatment at 145 degrees Celsius and 5 bar of oxygen is sufficient for reaching needed colour reduction. Colour reduction can be promoted by increasing the oxygen pressure. Colour pigments are oxidatively decomposed whereby the conjugated structure of pigment molecules, which provides the visible colour of the pigment is destroyed. In addition to colour removal, wet oxidation degraded the cellulose derived compounds such as carboxylic acids present in aqueous stream. This can be detected as a notable decrease in C6-C4 acids. The concentration of C1-C2 acids increased correspondingly. Oxidative treatment simultaneously consumes active alkali in the media. Oxidation of terephthalate needs a higher temperature than 180 degrees Celsius and or a higher oxygen pressure than 15 bar (at 180 degrees Celsius).

In an embodiment the method comprises recycling, optionally after wet air oxidation, in addition to the second aqueous permeate at least one, preferably one or more, of the following aqueous streams to an alkaline treatment step:
- the washing water of the washing operation,
- the aqueous liquid phase of the separation step, and
- the first aqueous permeate of the first membrane filtration step.

By carrying out the wet-oxidation, preferably for the first aqueous permeate prior to nanomembrane it increases the capacity of the nanomembrane as purification pretreatment.

In a particular embodiment the method comprises recycling the second aqueous permeate to the alkaline treatment step of the first modified fibrous raw-material Colour reduction and organic carbon reduction enable the recycling of recovered alkali. Without the reduction in colour pigments and organic carbon said contaminants accumulated in the process resulting in a higher carry-over from one process stage to subsequent stages. Contaminants may precipitate or otherwise disturb a particular process stage *e.g.* too much colour pigment or organic load carry-over into bleaching stage either increases consumption of active bleaching chemicals or reduces the whiteness of the bleached product. The second aqueous permeate typically comprises a purified active alkali species, such as sodium hydroxide, with the reduced amount of dissolved organic molecules or their undissolved microparticulates, e.g. colour pigments, terephthalate in the form of a sodium salt, alcohols such as ethylene glycol, carboxylic and hydroxy acids in the form of their sodium salts, and inorganic ions, such as small amounts of two and/or three valent cations mainly in the form of dissolved hydroxides, carbonates, sulphides, phosphates or silicates, or anions such as sulphates, chlorides, silicates, carbonates, phosphates dissolved and/or in the form of microparticulates and undissolved micro or nanoparticles such as cellulose or cellulose derived microparticulates or non-cellulosic microparticulates with mean size smaller than the resolution of the nanofiltration membrane (50 - 1000 Da).

In a further embodiment, the method comprises concentrating, in particular by evaporation, one or more aqueous streams selected from the washing water of the washing operation, the aqueous filtrate of the filtration step, the first aqueous permeate of the first membrane filtration step and the second aqueous permeate of the second membrane filtration step, to an effective alkalinity corresponding to at least 20 g/l, for example 25 to 100 g/l of NaOH, suitably 60 to 90 g/l NaOH content before recycling of said stream to the alkaline treatment step. In an embodiment one or more of the aqueous streams are recovered, mixed together and concentrated by evaporation to remove excess water.

In an embodiment the method comprises subjecting at least a part of the second reject fraction to diafiltering in the second nanomembrane filtration step, said diafiltering for example being carried out using water or an aqueous stream of a process step, such as an effluent, filtrate or supernatant. Diafiltering is typically carried out in order to maximise the recovery of alkali from the second reject fraction.

In one embodiment the method comprises recovering at least one, preferably both of, the first and the second reject fraction(s), containing at least one of terephthalate, colour pigments, and other organic carbon, and optionally subjecting it to further treatment, for example using biological purification or wet air oxidation or in a pulp mill integrate. Further treatment of one or more fractions containing terephthalate In an embodiment the first and/or second reject fractions is/are directed to effluent recovery and treatment preferably to be utilized in a Kraft pulp mill integrated chemical recovery process or alternatively directed to a chemical and/or biological wastewater treatment process.

In a particular embodiment the method comprises providing a fibrous raw-material containing a mixed-colour textiles. In a preferred embodiment, the method comprises recovering the solid matter of the separation to bleaching, for example to bleaching carried out with an oxidizing agent or a combination of oxidizing agents, for example selected from the group of ozone, peroxide and peroxo compounds, or a reducing agent, such as sodium dithionite, or a combination thereof. The bleaching is particularly preferred to remove colour in embodiments in which the fibrous-raw material contains mixed-colour textiles.

In an embodiment the method comprises subjecting the solid matter of the separation to dissolution, preferably the method comprises subjecting the solid matter of the separation to dissolution using a cellulose solvent and/or in the presence of a derivatizing agent. Suitable cellulose solvents include NMMO (N-Methylmorpholine N-oxide) used in traditional Lyocell process or ionic liquid based cellulose solvents suitable for use in processes producing Lyocell type fibres or modified Lyocell type fibres; metal ammine complexes e.g. copper ammine complex used in Cupro process or Schweitzer's Reagent, iron tartrate complex, or Zincoxen reagent ((tri(ethylenediamine) zinc hydroxide solution); sodium hydroxide or sodium zincate. Each of the mentioned solvents may be used either with or without organic surface active agents and/or urea and/or thiourea. Suitable derivatizing agents include e.g. carbon disulphide in viscose or modal processes or urea in the cellulose carbamate process.

In a further embodiment the method comprises using the solid matter of the separation as a starting material in the preparation of cellulose carbamate dope. In one embodiment the solid matter of the separation contains less than 1 % by weight, in particular less than 0.5 % by weight of terephthalate. In an embodiment, a part of the terephthalate may be present in the form of its polymers, e.g. in the polymeric form of the corresponding polyester, e.g. due to channeling of cooking liquor in a digester of due to incomplete contact between the feedstock and cooking reagents. Typically solid matter containing less than 0.5 % by weight of terephthalate is suitable as a starting material in the preparation of cellulose carbamate polymer and subsequent preparation of cellulose carbamate dope and cellulose carbamate spinning dope from the cellulose carbamate polymer. In an embodiment the evaporated liquor originating from aqueous liquid phase of the separation step recycled back to the alkaline treatment exhibits a colour reduction of at least 90 %, preferably at least 95 %, of the absorbance at 430 nm. The lower is the colour pigment content in the spin bath circulation, the smaller is the amount of the carry-over carried by the mass into following washing steps and further to following bleaching. Thus, low content of colour pigments, for example, decreases consumption of bleaching chemicals. Some colour pigments may be soluble into the spin bath at high temperatures, wherein those can not be necessary removed with water while the lye content decreases.

In an embodiment, the concentrated liquor provided by concentrating, in particular by evaporating one or more aqueous streams selected from the washing water of the washing operation, the aqueous filtrate of the filtration step, the first aqueous permeate of the first membrane filtration step and the second aqueous permeate of the second membrane filtration step before recycling of said stream to the alkaline treatment step exhibits a reduction of total organic carbon based on the colour pigments and cellulosic degradation products of 90 % by weight. Thus, in an embodiment the evaporated liquor exhibits a reduction of total organic carbon based on the colour pigments and cellulosic and polyester degradation products of at least 60 % by weight, suitably at least 65 % by weight, preferably about 70 % by weight.

Further embodiments relate to solid material obtainable by a method of above-described embodiments. In one embodiment solid matter obtainable by the method comprises less than 1 % terephthalate and its polymers by dry weight of the raw material, in particular less than 0.5 % terephthalate and its polymers by dry weight of the material and at least 95 % cellulosic fibers by dry weight of the raw material. In a further embodiment the cellulosic fibers are preferably cotton fibers. The cellulosic fibers have a final viscosity after both the acid step and the alkaline step in range of 200 to 500 ml/g, preferably 250 to 500 ml/g, suitably 250 to 450 ml/g, particularly 300 to 350 ml/g (based on the CED viscosity measurement according to the ISO 5351, modified).

The following non-limiting example illustrates at least some embodiments of the invention:

### Example 1 Chemical pretreatment

Recycled mixed colour sorted cotton textile waste with CED viscosity of 750 ml/g (modified ISO 5351) containing 8.8 % of non-cellulosic fibres (mainly polyester and traces of nylon) were mechanically shredded to disintegrate the fabric structure into the form of pieces having fibres of an average size of 6 mm. The shredded material (batch size of 295 kg of air dry shredded textile waste) was acid pre-treated in a digester with a medium consistency loop designed for processing of medium consistency wood fibre based pulp. The main part of the loop consisted of a standpipe and a related medium consistency pump. In the first acidic stage, the shredded material was treated with sulphuric acid at 95 degrees Celsius for 70 min; a liquid to solid ratio of 10 to 1 was applied, the initial acid charge was 5.0 g/l, and the final acid concentration in the end of cooking was 4.3 g/l. The pH value of the final washing liquid was 3.2 measured in wash filtrate corresponding to 0.6 g of free sulphuric acid per kilogram of dry acid treated material. The medium consistency pulp slurry in the acidic cooking liquor was circulated through a chemical mixer and returned to the top of the feed pipe. The flow in the loop was controlled by adjusting the speed of the pump and by bypassing the loop by directing part of the flow back to the lower part of the standpipe. The bypass was adjusted with a control valve suitable for fibre suspension. The viscosity of the acid treated material was 315 ml/g (based on the CED viscosity measurement according to the ISO 5351, modified). The average yield through acid stage was 89 % solids on oven-dried material in.

In a second, alkaline stage the washed, acid treated fibrous raw-material was chemically treated in a pressure reactor equipped with a medium consistency pump with sodium hydroxide at 110 °C for 120 min, liquid to solid ratio of 13 to 1 was applied, initial alkali charge was 71.7 g/l, final alkali concentration at the end of cooking was 63.7 g/l. The average yield through alkaline stage was 86 % solids on oven dried material in.

The alkali treated fibrous raw-material was subjected to separation to separate solid matter from an aqueous liquid phase comprising dissolved material and undissolved particles. The recovered raw-material was further subjected to a washing operation carried out with water. The separated solid matter was dewatered to a dry matter content of 55 % by weight using a screw press. The separated and recovered aqueous liquid phase had the following composition: pH value of 13.4, conductivity of 250 mS/cm, total concentration of solids substances of 740 mg/l (by gravimetry using a membrane with a porosity of 1 µm), turbidity of 210 NTU, absorbance of 8.8 (colour determined as absorbance of solution at the wavelength of 430 nm measured by VIS spectrophotometer), TOC of 15000 mg/l, total effective alkali as sodium hydroxide of 63.7 g/l (based on acid-base titration with hydrochloric acid and potentiometric detection of the end-point), formic acid concentration of 2.4 g/l, lactic acid concentration of 1.0 g/l, 3,4-Dideoxypentonic acid concentration of 1.3 g/l, terephthalic acid concentration of 4.5 g/l, β-(gluco)isosaccharinic acid concentration of 7.6 g/l, α-(gluco)isosaccharinic acid concentration of 2.8 g/l, calcium (Ca) concentration of 53 ppm, magnesium (Mg) concentration of <20 ppm iron (Fe) concentration of <30 ppm, phosphorus (P) concentration of <20 ppm, copper (Cu) concentration <2 ppm, silicon (Si) concentration of <50 ppm, aluminium (Al) concentration of <100 ppm and manganese (Mn) concentration of <5 mg.

The recovered aqueous liquid phase with the above mentioned composition was directed to the first filtration with micromembrane. Optifilter CR-250 served as apparatus for the micromembrane. Optifilter CR-250 had two flat sheet membranes with a rotor between membranes to enhance cross flow velocity on the surface of the membranes. Membrane with a pore size of 0.05 µm and total filtration area of 0.09 m2 was used. The permeate of Optifilter CR-250 was directed to the second filtration process with a nanomembrane. The filtration pressure used in Optifilter CR-250 was 2 bar with target flux of 200 LMH (litre per m² per hour). Filtration temperature was 52 - 60 degrees Celsius and feed volume was 50 L. Filtration was carried out up to as high WR (weight reduction %) as possible. Average flux at pressure 2 bar up to WR 84% was 230 LMH. The permeate passed through the micromembrane had the following composition: pH value of 13.4, conductivity of 240 mS/cm, absorbance of 6.4 (colour determined as absorbance of solution at the wavelength of 430 nm measured by VIS spectrophotometer), TOC of 13760 mg/l, total effective alkali as sodium hydroxide of 63.0 g/l (based on acid-base titration with hydrochloric acid and potentiometric detection of the end-point), formic acid concentration of 2.4 g/l, lactic acid concentration of 1.0 g/l, 3,4-Dideoxypentonic acid concentration of 1.3 g/l, terephthalic acid concentration of 4.5 g/l, β-(gluco)isosaccharinic acid concentration of 7.6 g/l, α-(gluco)isosaccharinic acid concentration of 2.8 g/l, calcium (Ca) concentration of <50 ppm, magnesium (Mg) concentration of <20 ppm iron (Fe) concentration of <30 ppm, phosphorus (P) concentration of <20 ppm, copper (Cu) concentration <2 ppm, silicon (Si) concentration of <50 ppm, aluminium (Al) concentration of <100 ppm and manganese (Mn) concentration of <5 mg.

The recovered aqueous liquid permeate obtained from microfiltration by micromembrane with the above mentioned composition was directed to the second filtration with the nanomembrane. The nanofiltration was performed with a SEPA filtration module equipped with a flow circulation measurement unit and a spiral wound membrane having a molecular cut-off of 100 Da and 1.6 m² membrane area was selected. Average flux at WR 50%, WR 60%, WR 70% and WR 80% was ~ 14 LMH, ~ 13 LMH, ~ 11 LMH and ~ 7 LMH respectively. Filtration pressure was 20 bar with target flux of 15 LMH (litre per m2 per hour). Filtration temperature was 50 degrees Celsius. The permeate passed through the nanomembrane at WR 70 % had the following composition: pH value of 13.6, conductivity of 260 mS/cm, absorbance of 0.37 (colour determined as absorbance of solution at the wavelength of 430 nm measured by VIS spectrophotometer), TOC of 3450 mg/l, total effective alkali as sodium hydroxide of 58.6 g/l (based on acid-base titration with hydrochloric acid and potentiometric detection of the end-point), formic acid concentration of 2.7 g/l, lactic acid concentration of 1.3 g/l, 3,4-Dideoxypentonic acid concentration of 0.9 g/l, terephthalic acid concentration of 0.6 g/l, β-(gluco)isosaccharinic acid concentration of 2.1 g/l, α-(gluco)isosaccharinic acid concentration of 0.8 g/l, calcium (Ca) concentration of <50 ppm, magnesium (Mg) concentration of <20 ppm iron (Fe) concentration of <30 ppm, phosphorus (P) concentration of <20 ppm, copper (Cu) concentration <2 ppm, silicon (Si) concentration of <50 ppm, aluminium (Al) concentration of <100 ppm and manganese (Mn) concentration of <5 mg. Permeate obtained through the filtration with micromembrane at the first stage and nanomembrane at the second stage at WR 70 % had the calculated TOC reduction of 77% and colour reduction of >95 %.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in recycling fibrous materials, particularly in the recycling of garments and textiles in which new fibres from cellulose carbamate dopes after the mechanical and chemical treatment of raw fibrous materials comprising cellulosic and polyester fibres.

## Claims

1. Method of treating a fibrous raw-material, comprising the steps of
providing a fibrous raw-material containing cellulosic fibres and polyester fibres;
subjecting the raw-material to acid treatment at a pH of less than 5 in an aqueous acid medium to obtain a first modified raw-material;
subjecting the first modified raw-material to a washing operation carried out with water;
subjecting the washed first modified fibrous raw-material to an alkaline treatment at a pH of more than 7 in an alkaline cooking liquor to dissolve at least a portion of the polyester fibres and to form a second modified fibrous raw-material;
subjecting the second modified fibrous raw-material to separation to separate solid matter from an aqueous liquid phase comprising dissolved material;
recovering the solid matter of the separation;
subjecting the recovered second modified raw-material to a washing operation carried out with water or an aqueous liquid;
**characterized in that**,
the liquid phase is subjected to a first membrane filtration step using a micromembrane to obtain a first reject fraction and a first aqueous permeate;
the first permeate is subjected to a second membrane filtration step using a nanomembrane to obtain a second reject fraction and a second permeate;
the second aqueous permeate is recovered and
the second aqueous permeate is recycled to an alkaline treatment step.

2. The method according to claim 1, comprising subjecting at least one of the following aqueous streams to wet air oxidation:
the washing water of the washing operation,
the aqueous liquid phase of the separation step,
the first aqueous permeate of the first membrane filtration step and
the second aqueous permeate of the second membrane filtration step,
optionally along with at least one of the first and the second reject fractions.

3. The method according to claim 1 or 2, comprising recycling, optionally after wet air oxidation, in addition to the second aqueous permeate at least one of the following aqueous streams to an alkaline treatment step:
the washing water of the washing operation,
the aqueous liquid phase of the separation step, and
the first aqueous permeate of the first membrane filtration step.

4. The method according to any of claims 1 to 3, comprising recycling the second aqueous permeate to the alkaline treatment step of the first modified fibrous raw-material..

5. The method according to any of the preceding claims, comprising carrying out the acid treatment in an aqueous inorganic or organic acid, in particular in aqueous mineral acid, such as sulphuric acid, in particular at a temperature in the range of 50 to 100°C, preferably 60 to 95°C, suitably >70°C.

6. The method according to any of the preceding claims, comprising carrying out the washing operation such that the first modified raw-material has a residual acid content of less than 5 % by weight of dry weight pulp, in particular less than 1 % by weight of dry weight pulp, for example less than 0.5 % by weight of dry weight pulp

7. The method according to any of the preceding claims, comprising carrying out the alkaline treatment in an aqueous alkaline medium with at least one alkaline agent selected from inorganic and organic bases, such as amines or metal or earth metal alkali hydroxides or carbonates, said alkaline agent being present in an amount which gives an alkalinity corresponding to at least,20 g/l, for example 25 to 100 g/l of NaOH, and said alkaline treatment in particular being carried out at a temperature of 100 to 150 °C.

8. The method according to any of the preceding claims, comprising carrying out the alkaline treatment using at least partially white liquor of a pulping process.

9. The method according to any of the preceding claims, comprising subjecting the second modified fibrous raw-material to separation to separate solid matter from aqueous phase in a filter, such as filter press, screw press or drum filter, or centrifuge.

10. The method according to any of the preceding claims, comprising carrying out the first membrane filtration step using a membrane having an average pore size (pore diameter) of 0.025 to 10 µm or molecular weight cut-off of 50 to 500 kDa.

11. The method according to any of the preceding claims, comprising carrying out the second membrane filtration step using a membrane having an average molecular weight cut-off of 50 to 1000 Da, preferably 50 - 500 Da, suitably 50 - 300 Da.

12. The method according to any of the preceding claims, comprising concentrating, in particular by evaporation, an aqueous stream selected from
the washing water of the washing operation,
the aqueous filtrate of the filtration step,
the first aqueous permeate of the first membrane filtration step and
the second aqueous permeate of the second membrane filtration step.
to an effective alkalinity corresponding to at least 20 g/l, for example 25 to 100 g/l of NaOH, suitably 60 to 90 g/l NaOH, before recycling of said stream to the alkaline treatment step.

13. The method according to any of the preceding claims, comprising subjecting at least a part of the second reject fraction to diafiltering in the second membrane filtration step, said diafiltering for example being carried out using water or an aqueous stream of a process step, such as an effluent, filtrate or supernatant.

14. The method according to any of the preceding claims, comprising recovering at least one, preferably both of, the first and the second reject fraction(s), containing at least one of terephthalate, colour pigments and other organic carbon, and optionally subjecting it to further treatment, for example using biological purification or wet air oxidation or in a pulp mill integrate.

15. The method according to any of the preceding claims, comprising providing a fibrous raw-material containing a mixed-colour textiles.

16. The method according to claim 15, comprising subjecting recovering the solid matter of the separation to bleaching, for example to bleaching carried out with an oxidizing agent or a combination of oxidizing agents, for example selected from the group of ozone, peroxide and peroxo compounds, or a reducing agent, such as sodium dithionite, or a combination thereof.

17. The method according to any of the preceding claims, comprising providing a fibrous raw-material containing at least 0.1 % by weight, in particular at least 1 % by weight, most suitably 2-8 % by weight, suitably 2-15 % by weight of polyester fibres, and up to 25 % of polyester fibres by dry weight of the raw-material.

18. The method according to any of the preceding claims, comprising subjecting the solid matter of the separation to dissolution.

19. The method according to any of the preceding claims, comprising subjecting the solid matter of the separation to dissolution using a cellulose solvent and/or in the presence of a derivatizing agent.

20. The method according to any of the preceding claims, comprising using the solid matter of the separation as a starting material in the preparation of cellulose carbamate dope and/or cellulose carbamate.

21. The method according to any of the preceding claims, wherein the solid matter of the separation contains less than 1 % by weight, in particular less than 0.5 % by weight of terephthalate and its polymers.

22. The method according to any of the preceding claims, wherein the evaporated liquor originating from aqueous liquid phase of the separation step recycled back to the alkaline treatment exhibits a colour reduction of at least 90 %, preferably of at least 95 %, of the absorbance at 430 nm.

23. The method according to any of the preceding claims, wherein the evaporated liquor originating from aqueous liquid phase of the separation step recycled back to the alkaline treatment exhibits a reduction of total organic carbon based on the colour pigments and cellulosic and polyester degradation products of at least 60 % by weight, suitably at least 65 % by weight, preferably about 70 % by weight.

24. Solid matter obtainable by a method according to any of the preceding claims comprising less than 1 % of terephthalate and its polymers by dry weight of the raw material, in particular less than 0.5 % of terephthalate and its polymers by dry weight of the material and at least 95 % cellulosic fibres by dry weight of the raw material, wherein the cellulosic fibers have a final viscosity after both the acid step and the alkaline step in range of 200 to 500 ml/g (based on CED viscosity measurement according to modified ISO 5351).

25. The solid material of claim 24, wherein the cellulosic fibers are preferably cotton fibers

26. The solid material of claim 24 or 25, wherein the cellulosic fibers have a final viscosity after both the acid step and the alkaline step in range of 250 to 500 ml/g, suitably 250 to 450 ml/g, particularly 300 to 350 ml/g

## Patentansprüche

1. Verfahren zum Behandeln eines faserigen Rohmaterials, umfassend die folgenden Schritte: Bereitstellen eines faserigen Rohmaterials, das Zellulosefasern und Polyesterfasern enthält;
Unterziehen des Rohmaterials einer Säurebehandlung bei einem pH-Wert von weniger als 5 in einem wässrigen Säuremedium, um ein erstes modifiziertes Rohmaterial zu erhalten;
Unterziehen des ersten modifizierten Rohmaterials einem Waschvorgang ausgeführt mit Wasser;
Unterziehen des gewaschenen ersten modifizierten faserigen Rohmaterials einer alkalischen Behandlung bei einem pH-Wert von mehr als 7 in einer alkalischen Kochlauge, um mindestens einen Teil der Polyesterfasern aufzulösen und ein zweites modifiziertes faseriges Rohmaterial zu bilden;
Unterziehen des zweiten modifizierten faserigen Rohmaterials einer Trennung, um Feststoffe von einer wässrigen flüssigen Phase, die gelöstes Material umfasst, abzutrennen;
Rückgewinnen der Feststoffe aus der Trennung;
Unterziehen des zurückgewonnenen zweiten modifizierten Rohmaterials einem Waschvorgang, ausgeführt mit Wasser oder einer wässrigen Flüssigkeit;
**dadurch gekennzeichnet, dass**
die flüssige Phase einem ersten Membranfiltrationsschritt unter Verwendung einer Mikromembran unterzogen wird, um eine erste Ausschussfraktion und ein erstes wässriges Permeat zu erhalten;
das erste Permeat einem zweiten Membranfiltrationsschritt unter Verwendung einer Nanomembran unterzogen wird, um eine zweite Ausschussfraktion und ein zweites Permeat zu erhalten;
das zweite wässrige Permeat zurückgewonnen wird und
das zweite wässrige Permeat in einen alkalischen Behandlungsschritt zurückgeführt wird.

2. Verfahren nach Anspruch 1, **dadurch gekennzeichnet, dass** mindestens einer der folgenden wässrigen Ströme einer Nassluftoxidation unterzogen wird:
das Waschwasser des Waschvorgangs,
die wässrige Flüssigphase aus dem Trennschritt,
das erste wässrige Permeat der ersten Membranfiltrationsstufe und
das zweite wässrige Permeat des zweiten Membranfiltrationsschritts, optional zusammen mit mindestens einer der ersten und der zweiten Ausschussfraktionen.

3. Verfahren nach Anspruch 1 oder 2, umfassend dass zusätzlich zum zweiten wässrigen Permeat mindestens einer der folgenden wässrigen Ströme, gegebenenfalls nach einer Nassluftoxidation, in einen alkalischen Behandlungsschritt zurückgeführt wird:
das Waschwasser des Waschvorgangs,
die wässrige Flüssigphase aus dem Trennschritt und
das erste wässrige Permeat des ersten Membranfiltrationsschritts.

4. Verfahren nach einem der Ansprüche 1 bis 3, umfassend das Rückführen des zweiten wässrigen Permeats in den alkalischen Behandlungsschritt des ersten modifizierten faserigen Rohstoffs.

5. Verfahren nach einem der vorstehenden Ansprüche, umfassend das Ausführen der Säurebehandlung in einer wässrigen anorganischen oder organischen Säure, insbesondere in einer wässrigen Mineralsäure wie Schwefelsäure, insbesondere bei einer Temperatur im Bereich von 50 bis 100°C, vorzugsweise 60 bis 95°C, geeignet >70°C.

6. Verfahren nach einem der vorstehenden Ansprüche, umfassend das Ausführen des Waschvorgangs derart, dass das erste modifizierte Rohmaterial einen Restsäuregehalt von weniger als 5 Gew.-%, bezogen auf die Trockenmasse der Faserstoffe, insbesondere von weniger als 1 Gew.-%, beispielsweise von weniger als 0,5 Gew.-% aufweist.

7. Verfahren nach einem der vorstehenden Ansprüche, umfassend das Ausführen der alkalischen Behandlung in einem wässrigen alkalischen Medium mit mindestens einem alkalischen Mittel, ausgewählt aus anorganischen und organischen Basen, wie Aminen oder Metall- oder Erdalkalihydroxiden oder -carbonaten, wobei das alkalische Mittel in einer Menge vorhanden ist, die eine Alkalität ergibt, die mindestens 20 g/l, beispielsweise 25 bis 100 g/l NaOH entspricht, wobei die alkalische Behandlung insbesondere bei einer Temperatur von 100 bis 150 °C ausgeführt wird.

8. Verfahren nach einem der vorstehenden Ansprüche, umfassend das Ausführen der alkalischen Behandlung mindestens teilweise unter Verwendung von Weißlauge eines Zellstoffkochprozesses.

9. Verfahren nach einem der vorstehenden Ansprüche, umfassend das Trennen des zweiten modifizierten faserigen Rohmaterials in einem Filter, wie z. B. Filterpresse, Schneckenpresse oder Trommelfilter, oder einer Zentrifuge, um Feststoffe von der wässrigen Phase zu separieren.

10. Verfahren nach einem der vorstehenden Ansprüche, umfassend das Ausführen des ersten Membranfiltrationsschritts unter Verwendung einer Membran mit einer durchschnittlichen Porengröße (Porendurchmesser) von 0,025 bis 10 µm oder einem Molekulargewichts-Cut-off von 50 bis 500 kDa.

11. Verfahren nach einem der vorstehenden Ansprüche, umfassend das Ausführen des zweiten Membranfiltrationsschritts unter Verwendung einer Membran mit einer durchschnittlichen Molekulargewichtsgrenze von 50 bis 1000 Da, vorzugsweise 50-500 Da, geeigneterweise 50-300 Da.

12. Verfahren nach einem der vorstehenden Ansprüche, umfassend das Konzentrieren, insbesondere durch Verdampfen, eines wässrigen Stroms, ausgewählt aus:
dem Waschwasser des Waschvorgangs,
dem wässrigen Filtrat des Filtrationsschrittes,
dem ersten wässrigen Permeat der ersten Membranfiltrationsstufe und
dem zweiten wässrigen Permeat des zweiten Membranfiltrationsschritts
auf eine wirksame Alkalität die mindestens 20 g/l entspricht, beispielsweise 25 bis 100 g/l NaOH, geeignet 60 bis 90 g/l NaOH, bevor der Strom in den alkalischen Behandlungsschritt zurückgeführt wird.

13. Verfahren nach einem der vorstehenden Ansprüche, umfassend das Unterziehen mindestens eines Teils der zweiten Retentatfraktion einer Diafiltration in der zweiten Membranfiltrationstufe, wobei die Diafiltration beispielsweise unter Verwendung von Wasser oder eines wässrigen Stroms aus einem Prozessschritt, wie einem Abwasser, Filtrat oder Überstand, ausgeführt wird.

14. Verfahren nach einem der vorstehenden Ansprüche, umfassend das Rückgewinnen mindestens einer, vorzugsweise beider, der ersten und der zweiten Ausschussfraktion(en), die mindestens eines von Terephthalat, Farbpigmenten und anderem organischen Kohlenstoff enthalten, und optionales Unterziehen derselben einer weiteren Behandlung, beispielsweise unter Verwendung einer biologischen Reinigung oder einer Nassluftoxidation oder in einer integrierten Zellstofffabrik.

15. Verfahren nach einem der vorstehenden Ansprüche, umfassend das Bereitstellen eines faserigen Rohmaterials, das ein Textil mit gemischten Farben enthält.

16. Verfahren nach Anspruch 15, umfassend das Unterziehen des bei der Trennung zurückgewonnenen Feststoffs einem Bleichschritt, beispielsweise einem Bleichschritt, der mit einem Oxidationsmittel oder einer Kombination von Oxidationsmitteln, beispielsweise ausgewählt aus der Gruppe bestehend aus Ozon, Peroxid und Peroxoverbindungen, oder einem Reduktionsmittel, wie Natriumdithionit, oder einer Kombination davon, ausgeführt wird.

17. Verfahren nach einem der vorstehenden Ansprüche, umfassend das Bereitstellen eines faserigen Rohmaterials, das mindestens 0,1 Gew.-%, insbesondere mindestens 1 Gew.-%, am besten geeignet 2-8 Gew.-%, geeignet 2-15 Gew.-% Polyesterfasern enthält, und bis zu 25 Gew.-% Polyesterfasern, bezogen auf die Trockenmasse des Rohmaterials.

18. Verfahren nach einem der vorstehenden Ansprüche, umfassend das Unterziehen des Feststoffs aus der Trennung einem Auflöseschritt.

19. Verfahren nach einem der vorstehenden Ansprüche, umfassend das Unterziehen des Feststoffes aus der Trennung einer Auflösung unter Verwendung eines Celluloselösungsmittels und/oder in Gegenwart eines Derivatisierungsmittels.

20. Verfahren nach einem der vorstehenden Ansprüche, umfassend das Verwenden des Feststoffes aus der Trennung als Ausgangsmaterial bei der Herstellung einer Cellulosecarbamat-Lösung und/oder Cellulosecarbamat.

21. Verfahren nach einem der vorstehenden Ansprüche, wobei der Feststoff aus der Trennung weniger als 1 Gew.-%, insbesondere weniger als 0,5 Gew.-% Terephthalat und dessen Polymere enthält.

22. Verfahren nach einem der vorstehenden Ansprüche, wobei die eingedampfte Lauge, die aus der wässrigen Flüssigphase des Trennschritts stammt und in die alkalische Behandlung zurückgeführt wird, eine Farbreduktion von mindestens 90 %, vorzugsweise von mindestens 95 %, der Absorption bei 430 nm aufweist.

23. Verfahren nach einem der vorstehenden Ansprüche, wobei die eingedampfte Lauge, die aus der wässrigen Flüssigphase des Trennschritts stammt und in die alkalische Behandlung zurückgeführt wird, eine Verringerung des gesamten organischen Kohlenstoffs, bezogen auf Farbpigmente sowie Zellulose- und Polyesterabbauprodukte, von mindestens 60 Gew.-%, geeignet von mindestens 65 Gew.-%, vorzugsweise von etwa 70 Gew.-% aufweist.

24. Feststoff, erhältlich durch ein Verfahren nach einem der vorstehenden Ansprüche, umfassend weniger als 1 Gew.-% Terephthalat und dessen Polymeren, bezogen auf die Trockenmasse des Rohmaterials, insbesondere weniger als 0,5 Gew.-% Terephthalat und dessen Polymeren, bezogen auf die Trockenmasse des Materials, und mindestens 95 Gew.-% Zellulosefasern, bezogen auf die Trockenmasse des Rohmaterials, wobei die Zellulosefasern nach sowohl dem Säureschritt als auch dem alkalischen Schritt eine Endviskosität im Bereich von 200 bis 500 ml/g aufweisen (basierend auf CED-Viskositätsmessung nach modifizierter ISO 5351).

25. Fester Stoff nach Anspruch 24, wobei die Zellulosefasern vorzugsweise Baumwollfasern sind

26. Feststoff nach Anspruch 24 oder 25, wobei die Zellulosefasern nach sowohl dem Säureschritt als auch dem alkalischen Schritt eine Endviskosität im Bereich von 250 bis 500 ml/g, geeignet von 250 bis 450 ml/g, insbesondere von 300 bis 350 ml/g, aufweisen

## Revendications

1. Procédé de traitement d'une matière première fibreuse, comprenant les étapes consistant à fournir une matière première fibreuse contenant des fibres cellulosiques et des fibres de polyester ;
la soumission de la matière première à un traitement acide à un pH inférieur à 5 dans un milieu acide aqueux pour obtenir une première matière première modifiée ;
la soumission de la première matière première modifiée à une opération de lavage effectuée à l'eau ;
la soumission de la première matière première fibreuse modifiée lavée à un traitement alcalin à un pH supérieur à 7 dans une liqueur de cuisson alcaline pour dissoudre au moins une partie des fibres de polyester et former une seconde matière première fibreuse modifiée ;
la soumission de la seconde matière première fibreuse modifiée à une séparation pour séparer la matière solide d'une phase liquide aqueuse comprenant une matière dissoute ;
la récupération de la matière solide de la séparation ;
la soumission de la seconde matière première modifiée récupérée à une opération de lavage effectuée avec de l'eau ou un liquide aqueux ;
**caractérisé en ce que**,
la phase liquide est soumise à une première étape de filtration membranaire utilisant une micromembrane pour obtenir une première fraction de rejet et un premier perméat aqueux ;
le premier perméat est soumis à une seconde étape de filtration membranaire utilisant une nanomembrane pour obtenir une seconde fraction de rejet et un second perméat ;
le second perméat aqueux est récupéré et
le second perméat aqueux est recyclé vers une étape de traitement alcalin.

2. Procédé selon la revendication 1, comprenant la soumission d'au moins l'un des flux aqueux suivants à une oxydation à l'air humide :
l'eau de lavage de l'opération de lavage,
la phase liquide aqueuse de l'étape de séparation,
le premier perméat aqueux de la première étape de filtration membranaire et
le second perméat aqueux de la seconde étape de filtration membranaire, éventuellement accompagné d'au moins l'une des première et seconde fractions de rejet.

3. Procédé selon la revendication 1 ou 2, comprenant le recyclage, éventuellement après oxydation à l'air humide, en plus du second perméat aqueux, d'au moins l'un des flux aqueux suivants vers une étape de traitement alcalin :
l'eau de lavage de l'opération de lavage,
la phase liquide aqueuse de l'étape de séparation, et
le premier perméat aqueux de la première étape de filtration membranaire.

4. Procédé selon l'une quelconque des revendications 1 à 3, comprenant le recyclage du second perméat aqueux vers l'étape de traitement alcalin de la première matière première fibreuse modifiée.

5. Procédé selon l'une quelconque des revendications précédentes, comprenant la mise en œuvre du traitement acide dans un acide aqueux inorganique ou organique, en particulier dans un acide minéral aqueux, tel que l'acide sulfurique, en particulier à une température comprise entre 50 et 100 °C, de préférence entre 60 et 95 °C, de manière appropriée >70 °C.

6. Procédé selon l'une quelconque des revendications précédentes, comprenant la réalisation de l'opération de lavage de telle sorte que la première matière première modifiée présente une teneur en acide résiduel inférieure à 5 % en poids de pâte sèche, en particulier inférieure à 1 % en poids de pâte sèche, par exemple inférieure à 0,5 % en poids de pâte sèche.

7. Procédé selon l'une quelconque des revendications précédentes, comprenant la mise en œuvre du traitement alcalin dans un milieu alcalin aqueux avec au moins un agent alcalin choisi parmi les bases inorganiques et organiques, telles que les amines ou les hydroxydes ou carbonates alcalins de métaux ou de métaux terreux, ledit agent alcalin étant présent en une quantité qui donne une alcalinité correspondant à au moins 20 g/l, par exemple 25 à 100 g/l de NaOH, et ledit traitement alcalin étant notamment réalisé à une température de 100 à 150 °C.

8. Procédé selon l'une quelconque des revendications précédentes, comprenant la mise en œuvre du traitement alcalin en utilisant au moins partiellement de la liqueur blanche d'un processus de réduction en pâte.

9. Procédé selon l'une quelconque des revendications précédentes, comprenant la soumission de la seconde matière première fibreuse modifiée à une séparation pour séparer la matière solide de la phase aqueuse dans un filtre, tel qu'un filtre-presse, une presse à vis ou un filtre à tambour, ou une centrifugeuse.

10. Procédé selon l'une quelconque des revendications précédentes, comprenant la mise en œuvre de la première étape de filtration membranaire à l'aide d'une membrane présentant une taille de pores moyenne (diamètre de pores) de 0,025 à 10 µm ou une coupure de masse moléculaire de 50 à 500 kDa.

11. Procédé selon l'une quelconque des revendications précédentes, comprenant la mise en œuvre de la seconde étape de filtration membranaire en utilisant une membrane présentant une coupure de masse moléculaire moyenne de 50 à 1 000 Da, de préférence de 50 à 500 Da, de manière appropriée de 50 à 300 Da.

12. Procédé selon l'une quelconque des revendications précédentes, comprenant la concentration, en particulier par évaporation, d'un flux aqueux choisi parmi
l'eau de lavage de l'opération de lavage,
le filtrat aqueux de l'étape de filtration,
le premier perméat aqueux de la première étape de filtration membranaire et
le second perméat aqueux de la seconde étape de filtration membranaire
à une alcalinité effective correspondant à au moins 20 g/l, par exemple 25 à 100 g/l de NaOH, de manière appropriée 60 à 90 g/l de NaOH, avant recyclage dudit flux vers l'étape de traitement alcalin.

13. Procédé selon l'une quelconque des revendications précédentes, comprenant la soumission d'au moins une partie de la seconde fraction de rejet à une diafiltration dans la seconde étape de filtration membranaire, ladite diafiltration étant par exemple réalisée en utilisant de l'eau ou un courant aqueux d'une étape de processus, tel qu'un effluent, un filtrat ou un surnageant.

14. Procédé selon l'une quelconque des revendications précédentes, comprenant la récupération d'au moins une, de préférence les deux, de la première et de la seconde fraction(s) de rejet, contenant au moins l'un parmi le téréphtalate, les pigments de couleur et un autre carbone organique, et éventuellement la soumission à un traitement supplémentaire, par exemple en utilisant une purification biologique ou une oxydation à l'air humide ou dans une usine de pâte à papier intégrée.

15. Procédé selon l'une quelconque des revendications précédentes, comprenant la fourniture d'une matière première fibreuse contenant des textiles de couleurs mélangées.

16. Procédé selon la revendication 15, comprenant la soumission de la matière solide de la séparation à un blanchiment, par exemple à un blanchiment effectué avec un agent oxydant ou une combinaison d'agents oxydants, par exemple choisis dans le groupe de l'ozone, du peroxyde et des composés peroxo, ou un agent réducteur, tel que le dithionite de sodium, ou une combinaison de ceux-ci.

17. Procédé selon l'une quelconque des revendications précédentes, comprenant la fourniture d'une matière première fibreuse contenant au moins 0,1% en poids, en particulier au moins 1 % en poids, le plus approprié 2-8 % en poids, de manière appropriée 2-15 % en poids de fibres de polyester, et jusqu'à 25 % de fibres de polyester par rapport au poids sec de la matière première.

18. Procédé selon l'une quelconque des revendications précédentes, comprenant la soumission de la matière solide de la séparation à une dissolution.

19. Procédé selon l'une quelconque des revendications précédentes, comprenant la soumission de la matière solide de la séparation à une dissolution à l'aide d'un solvant cellulosique et/ou en présence d'un agent de dérivation.

20. Procédé selon l'une quelconque des revendications précédentes, comprenant l'utilisation de la matière solide de la séparation comme matière de départ dans la préparation de la solution de carbamate de cellulose et/ou du carbamate de cellulose.

21. Procédé selon l'une quelconque des revendications précédentes, dans lequel la matière solide de la séparation contient moins de 1 % en poids, en particulier moins de 0,5 % en poids de téréphtalate et de ses polymères.

22. Procédé selon l'une quelconque des revendications précédentes, dans lequel la liqueur évaporée provenant de la phase liquide aqueuse de l'étape de séparation recyclée vers le traitement alcalin présente une réduction de couleur d'au moins 90 %, de préférence d'au moins 95 %, de l'absorbance à 430 nm.

23. Procédé selon l'une quelconque des revendications précédentes, dans lequel la liqueur évaporée provenant de la phase liquide aqueuse de l'étape de séparation recyclée vers le traitement alcalin présente une réduction du carbone organique total basé sur les pigments de couleur et les produits de dégradation cellulosiques et polyesters d'au moins 60 % en poids, de manière appropriée au moins 65 % en poids, de préférence environ 70 % en poids.

24. Matière solide pouvant être obtenue par un procédé selon l'une quelconque des revendications précédentes comprenant moins de 1 % de téréphtalate et de ses polymères en poids sec de la matière première, en particulier moins de 0,5 % de téréphtalate et de ses polymères en poids sec du matériau et au moins 95 % de fibres cellulosiques en poids sec de la matière première, dans laquelle les fibres cellulosiques présentent une viscosité finale après l'étape acide et l'étape alcaline dans la plage de 200 à 500 ml/g (sur la base de la mesure de la viscosité CED selon la norme ISO 5351 modifiée).

25. Matière solide selon la revendication 24, dans laquelle les fibres cellulosiques sont de préférence des fibres de coton.

26. Matière solide selon la revendication 24 ou 25, dans laquelle les fibres cellulosiques présentent une viscosité finale après l'étape acide et l'étape alcaline dans la plage de 250 à 500 ml/g, de manière appropriée 250 à 450 ml/g, particulièrement 300 à 350 ml/g.
